# EUROPEAN PATENT APPLICATION

(11) **EP 0 949 490 A1**
(43) Date of publication of application: **13.10.1999**
(21) Application number: 99201108.0
(22) Date of filing: 03.04.1999
(51) Int. Cl.: G01J 3/28

(54) **Inspection device**

(30) Priority: 07.04.1998 BE 9800268
(71) Applicant: Teejet Technologies, Besloten vennootschap met beperkte aansprakelijkheid, 9051 Sint-Denijs-Westrem (BE); K.U. LEUVEN RESEARCH & DEVELOPMENT, 3000 Leuven (BE)
(72) Inventor: Feyaerts, Filip, 1730 Asse (BE); Pollet, Pascal, 3000 Leuven (BE); Marien, Dirk, 2520 Emblem (BE); Van Gool, Luc, 2170 Merksem (BE)
(74) Representative: Donné, Eddy

(57) **Abstract**

Inspection device containing means to spectrally split up reflected light or transmitted light, an image recorder (2) coupled thereto and a processor (3) connected to the image recorder (2) for processing its signals, characterized in that the image recorder (2) is of the type which can read out lines or parts of lines separately.

## Description

The present invention concerns an inspection device containing means to spectrally split up reflected light or light which has been transmitted through an object, an image recorder coupled thereto and a processor connected to the image recorder for processing its signals.

Such inspection devices make use of the characteristic that every material has its own spectral signature, i.e. a specific alteration of the reflected or transmitted irradiation through the object as a function of the wave length. By comparing the reflectance or transmission, it is possible to distinguish materials from one another. For a number of typical wave lengths, the difference in reflectance will be relatively large. One only has to compare the reflectance or transmission for one or several of these wave lengths.

Also, the above-mentioned inspection devices are already used in the industrial sector to inspect objects or to detect for example foreign substances in a material.

They contain a spectrometer, consisting of an imaging spectrograph which spectrally splits up or decomposes the light which is reflected by a strip of an object or which is transmitted on the one hand, and of a usually monochrome CCD camera as an image recorder or imager which is connected to the processing unit or processor.

Such device is disclosed by HERRALA E. et al. in "Imaging spectrometer for process industry applications", PROCEEEDINGS OF THE SPIE, vol 2248, 20 June 1994, p.33-40.

The spectrograph splits up the image of the strip in images of different wave lengths, so that the resulting image which is recorded by the CCD camera consists of a number of images of the strip situated next to one another, each time for a different wave length.

The entire image of this CCD camera and thus the images for all the wavelengths are read, but since only one or a restricted number of typical wave lengths can or have to be compared, the images corresponding to these typical wave lengths are used by the processor.

The reading out of the entire image which has been recorded by the CCD camera is relatively time-consuming, however, and this camera is the main cause of the restriction of the inspection speed.

Moreover, the present CCD camera's are still relatively expensive and heavy.

Also plants have a spectral signature and by spectrally splitting up light which is reflected by planted soil, the vegetation of this soil and also plants can be distinguished from one another. Especially for certain wave lengths, the difference in reflectance is large. Thus, for example, the difference in reflectance between earth and a crop is particularly large in the infrared range.

The application of this capacity to selectively eradicate weeds has already been described in detail. By only spraying weed killer there where weeds are detected, the weed killer consumption drops significantly, which is not only economical, but in particular also less harmful for the environment.

Inspection devices have already been designed for the selective spraying of weed killers on weed which are based on differences in spectral reflectance characteristics.

The reason is that these devices are too slow and/or have too little spacial resolution or also are too large, too heavy or too vulnerable to be applied on the spraying booms of a spraying device which is moved over the crops.

The present invention aims an inspection device which avoids the above-mentioned and other disadvantages and which allows for a relatively fast inspection, and which can be made relatively economical and quite compact and light.

This aim is reached according to the invention in that the image recorder is of the type which can read out lines or parts of lines separately.

In particular, this image recorder is a CMOS image recorder.

A CMOS image recorder is an image recorder whose integrated circuits make use of the CMOS technology (Complementary Metal Oxide Semiconductor), as a result of which the power consumption and heat development are very low.

What is particularly important is the fact that such an image recorder is capable of reading out one or several lines with pixels or parts of these lines separately from the image, so that the useful information can be transmitted to the processor considerably faster than when all the lines have to be transmitted first.

The means for spectrally splitting out the reflected or transmitted light may here also consist of a spectrograph.

In order to better explain the characteristics of the invention, the following preferred embodiment of an inspection device according to the invention is represented as an example only without being limitative in any way, with reference to the accompanying drawings, in which:
figure 1 schematically represents an inspection device according to the invention;
figure 2 schematically represents another embodiment of an inspection device according to the invention.

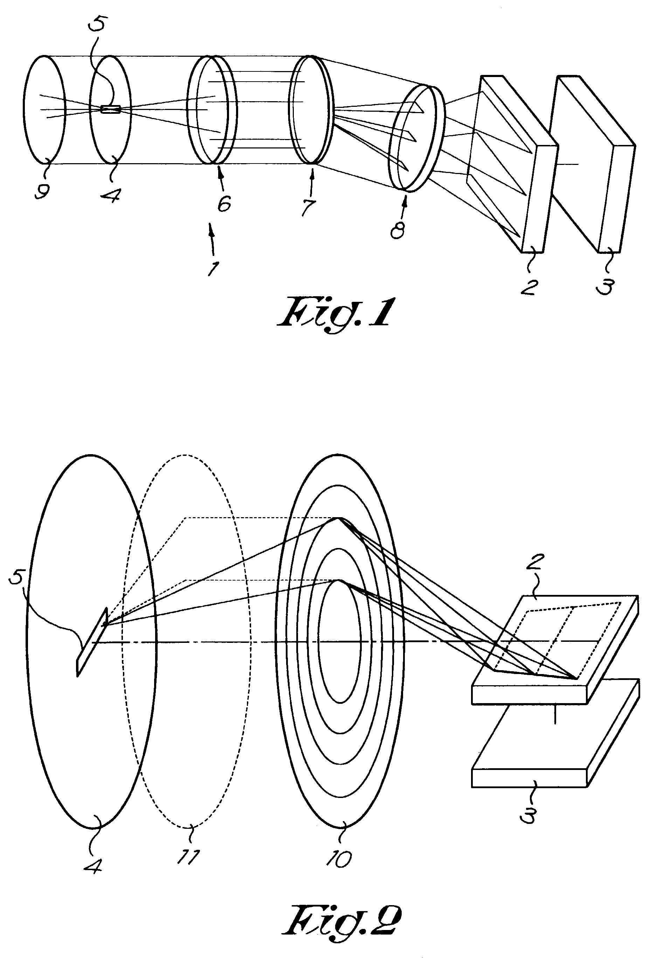

The inspection device as represented in figure 1 mainly consists of a spectrograph which is composed of an imaging spectrograph 1 forming means for spectrally splitting up reflected or transmitted light and a CMOS image recorder 2 working in conjunction with it on the one hand, and a processor 3 for processing the signals from the CMOS image recorder 2, coupled to this CMOS image recorder 2.

The spectrograph 1 consists for example of a front 4 with a narrow slot 5, a front optical system 6 or collimator, a diffracting element 7 formed by a diffraction grating and a rear optical system 8.

A suitable spectrograph 1 is for example marketed under the name "Imspector" by the company SPECIM.

The front 4 with the slot 5 may be preceded by an objective 9 whose image area coincides with the slot 5.

The optical axes of the optical systems 6 and 8 may form an angle.

The CMOS image recorder 2 or imager is a chip which is erected opposite the rear optical system 8.

The CMOS image recorder 2 is a non-integrating sensor, which implies that one does not have to wait for an integration time for reading out, and it is capable of reading out lines with pixels or parts thereof, coinciding with different wave lengths, separately instead of the entire image which is for example composed of 512 on 512 pixels.

In fact, it is of the type of what is called "with truly random read-out capabilities", in other words it is capable of reading out the value of each individual pixel separately by selecting the X and Y read-out lines.

Naturally, it can also separately read out several pixels forming a line or a part thereof upon request of the processor 3.

A suitable CMOS image recorder 2 is the CMOS camera which is sold under the brand name "Fuga 15c" by the company CCAM Technologies N.V.

The spectral sensitivity of such a camera type is situated between 400 and 1050 nm, which is comparable to the sensitivity of a CCD camera.

The CMOS image recorder 2, as well as the above-mentioned "Fuga 15c" camera, may contain a built-in analog-to-digital converter, so that an external image reception card is not required.

The processor 3 has the required logic to process the signals of the image recorder 2. It may contain a comparator which compares the signals of the CMOS image recorder 2 with standards stored in its memory and/or an arithmetic unit calculating a classification algorithm.

This processor 3 may be entirely or partly integrated in the CMOS chip, so that the device can be made even more compact and lighter.

The reflected or transmitted light may be the daylight. According to a variant, the inspection device contains a light source, however, for example a halogen lamp, which exposes the surface to be inspected together with or in the place of the daylight. A light source also makes it possible to detect in the dark or to reduce the dependence of variations in the daylight.

The working of the above-described inspection device is simple and as follows:

By means of the objective 9, the light which is reflected by a part of the surface to be inspected or which is transmitted through this surface is projected on the slot 5 in the front 4.

Through this slot 5, a part of this reflected or transmitted light which coincides with the reflected or transmitted light of a strip of the surface is extracted.

The front optical system 6 collimates this light entering through the slot 5 which is then further split up in its spectral components by the diffracting element 7, i.e. according to its wavelength.

The figure represents only three such wavelengths, but in reality there are much more of them. Naturally, the number of wavelengths is adapted to the CMOS image recorder 2.

By the rear optical system 8 is formed an image of this diffracted light which is finally projected on the CMOS image recorder 2.

As the optical axes of the optical systems 6 and 8 form an angle, only diffracted light of the first order will reach the CMOS image recorder. This erection also reduces the angle between the incident light and the optical axis of the second optical system, as a result of which aberrations in the imaging are reduced.

By adding extra components such as for example a prism to the spectrograph 1, these optical axes could be placed in line as in the above-mentioned spectrograph 1 which is marketed by the company SPECIM.

The spectrograph 1 does not contain any moving parts, it is relatively robust and it can give the entire spectral image of the inspected strip as a whole.

One of the axes of this CMOS image recorder 2, the vertical axis in the figure, coincides with a spectral axis, whereas the other axis coincides with a spacial axis.

On this image recorder 2, a number of images of the strip are each time formed for a different frequency, in the example represented on top of one another.

Instead of having to read all the information, i.e. all the lines coinciding with the wave lengths, and having to send information related to it to the processor 3, the CMOS image recorder 2 only reads those images and thus those lines or wave lengths which are typical, and which are thus required for further processing.

This reading out of one or a limited number of wave lengths and the transmission of the coinciding information to the processor 3 naturally goes much faster then when all the lines have to be read out.

In practice, usually about ten random lines or images with different wave lengths are required, which is for example 50 times less than with a CCD camera (charge coupled device) for the same number of lines and pixels per line, so that for this case the reading out can be carried out 50 times faster.

However, this large speed increase does not raise the cost price. On the contrary, according to the present market prices, a CMOS image recorder is cheaper than a CCD camera.

It is even possible to read only part of the selected lines. For example, if only a part of the strip whose reflected or transmitted light falls in the spectrograph 1 needs to be inspected, only the coinciding part of the selected lines or wave lengths should be read.

In an extreme case, only one pixel or a very restricted number of pixels of each selected line can be read. In this case, the spacial component is omitted and only the spectral component is preserved, so that no strip but a spot or patch of the surface to be inspected is inspected.

In this case, it is not necessary to use a CMOS image recorder 2 with for example a square surface, but a linear CMOS image recorder 2 will do.

It is also possible to switch lines very quickly, and to thus select other or additional lines or wave lengths.

Instead of a spectrograph 1, other means can be used to obtain a spectral decomposition of the reflected or transmitted light. Thus, the spectral decomposition can be obtained by means of an optical diffraction element, rotating disc with filters, etc.

Figure 2 represents an embodiment which differs from the above-described embodiment in that the means for obtaining a spectral decomposition contain an optical diffraction element formed of a zone plate or zone lens 10 instead of a spectrograph.

A zone lens is similar to an ordinary lens, save that its focal length is inversely proportionate to the wave length of the light. In front of this zone lens 10 is also erected a front 4 provided with a slot 5, and light of one point of the slot 5 is split up in its spectral components by the zone lens 10.

The diffracted light forms a line image on the surface of the CMOS image recorder 2, whose surface is parallel to the optical axis so as to obtain a correct imaging.

The above-mentioned line image will not be rectangular, but trapezoid, since the focal length and thus the enlargement varies according to the wave length. For larger wave lengths, such as red and infrared, the focal length is shorter and thus the enlargement smaller.

According to a variant, an additional lens 11 may be erected between the front 4 and the zone lens 10 which first collimates the light before it falls on the zone lens 10. In figure 2, such an additional lens 11 is represented as a dashed line.

The reflected or transmitted light of a narrow strip of a surface is each time inspected in the above-described manner. By moving the inspection device preferably crosswise on this strip in relation to the surface, or inversely, by moving the surface preferably crosswise on this strip in relation to the stationary inspection device, the entire material surface may be inspected if required.

Also, the above-described inspection devices may be used in all sorts of applications, in the industrial as well as the medical or agrarian sector.

A possible application is the inspection of objects in the industry, for example inspecting a metal plate in order to detect any possible flaws. These flaws will give a different spectral reflectance curve. The processor emits a signal when a flaw is detected.

In an analogous manner, also textile can be inspected in order to detect for example weaving flaws or colour flaws.

These materials to be inspected can be moved past the stationary inspection device at a high speed.

The device can also be used for sorting or classifying objects or goods.

Another interesting application of the inspection device is inspecting the soil with vegetation.

With this device, it is not only possible to distinguish vegetation from soil, but also different plants, and consequently for example weeds from crops.

Differences in the reflectance of the plants in the visible wave length scope are mainly due to their chlorophyll production, whereas differences in the reflectance in the near infrared are due to the inner structure of the plant.

The above-described inspection device may be part of a spraying installation which can spray in a selective manner (manure, fungicides, herbicides, insecticides or other products used in the agricultural sector), or it may be part of a system which activates other locally acting treatments. Thus, it is possible to activate the treatment only there where it is required.

If the spraying installation is an appliance for eradicating weeds, several inspection devices are usually applied on the spraying boom, for example one every three metres, and the CMOS imager 2 of each inspection device will only read out those images for the wave lengths which make it possible to distinguish one or several weed sorts from the soil or crop. The processor 3 then makes sure to send a signal to the control of the spray nozzles every time weed is detected, so that weed killer is only sprayed on this weed.

In an analogous manner, insecticide, fungicide or manure can be selectively sprayed on the crop each time the inspection device distinguishes a plant from the soil.

The light response of a CMOS image recorder is logarithmic, so that it is easy and inexpensive to take the changing ambient light into consideration, which may be useful among others in the above-mentioned appliances for the agricultural sector, where parts of the surface to be inspected may be strongly exposed by the sun, whereas others may be situated in the shadow.

The above-described sensors consisting of the means to spectrally split up reflected or transmitted light and the image recorder 2 coupled thereto make it possible to obtain data in a very flexible manner and for a large number of wave lengths with a relatively good spectral and spacial resolution which can then be further processed by the processor 3.

The invention is by no means limited to the embodiments described above and represented in the accompanying drawing; on the contrary, such an inspection device can be made in all sorts of variants while still remaining within the scope of the invention.

## Claims

1. Inspection device containing means to spectrally split up reflected light or transmitted light, an image recorder (2) coupled thereto and a processor (3) connected to the image recorder (2) for processing its signals, characterized in that the image recorder (2) is of the type which can read out lines or parts of lines separately.

2. Inspection device according to claim 1, characterized in that the image recorder (2) is a CMOS image recorder.

3. Inspection device according to claim 1 or 2, characterized in that the means for spectrally splitting up the reflected or transmitted light contain a spectrograph (1).

4. Inspection device according to claim 3, characterized in that the spectrograph (1) contains a front optical system (6), a diffracting element (7) and a rear optical system (8), whereby the optical axes of the two optical systems (6 and 8) form an angle.

5. Inspection device according to claim 1 or 2, characterized in that the means for spectrally splitting up reflected or transmitted light contain a diffracting optical element.

6. Inspection device according to claim 5, characterized in that the diffracting optical element is a zone lens (10).

7. Inspection device according to claim 4 or 5, characterized in that the zone lens (10) is preceded by a lens (11).

8. Inspection device according to any of the preceding claims, characterized in that the means for spectrally splitting up the reflected or transmitted light contain a front (4) at the front side, provided with a narrow slot (5).

9. Inspection device according to claim 8, characterized in that it contains a lens (9) in front of the front (4).

10. Inspection device according to any of the preceding claims, characterized in that it is part of a spraying installation for plants, whereby it distinguishes plants from one another and whereby it is coupled to a spraying system, for example for selectively spraying weed killer.

11. Inspection device according to any of claims 1 to 9, characterized in that it is part of a device for detecting flaws or such in materials.

12. Inspection device according to any of claims 1 to 9, characterized in that it is part of a device for classifying objects or materials.
